# EUROPEAN PATENT APPLICATION

(11) **EP 2 975 567 A1**
(43) Date of publication of application: **20.01.2016**
(21) Application number: 15174122.0
(22) Date of filing: 26.06.2015
(51) Int. Cl.: G06Q 20/02, G06Q 20/20, G06Q 20/32, G06Q 20/38, G06Q 20/40, G06Q 30/02

(54) **FREQUENT CUSTOMER ELECTRONIC PAYMENT SYSTEM AND PROCESS FOR SETTLING BENEFITS PROVIDED TO FREQUENT CUSTOMERS BY PRODUCT PARTNERS**

(30) Priority: 27.06.2014 HU 1400332
(71) Applicant: Inlernet Worldwide AG, 8832 Wollerau (CH)
(72) Inventor: Zsolt, Leinemann, 8874 Switzerland (CH)
(74) Representative: Kacsuk, Zsófia

(57) **Abstract**

The invention relates to frequent customer electronic payment system for settling benefits provided to frequent customers by product partners, characterised by comprising a product partner communication device (100) and a central IT device (200) which are connectable by an electronic communication channel (20), which product partner communication device (100) comprises:
- a communication unit (102)
- at least one input interface (104),
- at least one output interface (106), and
- a product partner electronic payment unit (110) having:
- a frequent customer data reader part unit (111) and a payment information reader part unit (112) in connection with the at least one input interface (104), and
- a user surface display part unit (115) in connection with the at least one output interface (106), and
- an electronic payment control part unit (116) in connection with the frequent customer data reader part unit (111), the payment information reader part unit (112), the user surface display part unit (115) and the communication unit (102) and which central IT device (200) comprises:

- a central communication unit (202), and
- a central electronic payment unit (210) having:
- at least one product partner data store part unit (211),
- a plurality of frequent customer data store part units (212),
- an accounting part unit (214) in connection with the product partner and the frequent customer data store part units (211, 212), and

a central control part unit (216) in connection with the at least one product partner data store part unit (211), the plurality of frequent customer data store part units (212), the accounting part unit (214), and the central communication unit (202).

The invention further relates to a process for settling benefits provided to frequent customers by product partners.

## Description

The invention relates to a frequent customer electronic payment system for settling benefits provided to frequent customers by product partners and such method.

The aim of the frequent customer systems is to provide benefits to customers who are frequently buying at a given merchant or service provider (hereinafter commonly: product partner), thus the customer is interested in possibly always buying at the given product partner, and the product partner can count on a frequent customer in return of the provided benefit. The frequent customers can be further motivated by being provided with benefits not only for their own purchases but also for the purchases of other frequent customers for example in the form of commission. However, current frequent customer systems does not allow for the immediate settling of the benefits (commissions), thus the customer who is provided with a benefit for the purchase of another frequent customer cannot dispose over the benefit immediately, cannot use it or spend it immediately.

For example in the currently existing Inlernet frequent customer system the product partner is obliged to send purchase data to the frequent customer system at least once a month over the purchase data recorder or mass purchase data recorder menu item of its web office. After this, the product partner receives an invoice or an electronic invoice once every month which it is expected to clear financially within an 8-days term either by bank transfer from a bank account or by cash payment at a bank for the operating company of the frequent customer system. Within a few days of the amount being entered on the bank account, the frequent customers receive on their virtual accounts returns or discounts from the paid or transferred commission. Consequently, as much as a month may pass between the purchase and the return, the settling of the benefit. Moreover, in the current system it is not possible for a customer to purchase without cash or bank card or a printed electronic voucher or a paper form product partner voucher (i.e. any or some kind of payment means). Since the presence of payment means is always necessary, thus this increases the risks associated with payment (e.g. loss, theft).

It is an objective of the present invention to provide a frequent customer payment system that overcomes the problems associated with the prior art. In particular, it is an objective of the invention to provide a frequent customer electronic payment system and process which is suitable for the immediate settling of benefits provided by the product partners even if such benefits or portions thereof are not provided to the purchasing frequent customer but to one or more other frequent customers.

The invention is based on the recognition that if the accounts of the product partners (merchants, service providers) and of the frequent customers are kept centrally, and if at least the product partners are provided with such a communication device over which information concerning the currently purchasing frequent customer and the following payment can be transmitted to a central IT device, then any benefits (even provided to multiple frequent customers) rewarding the payment as well as the actual payment amount can be settled centrally between the account of the product partner and the account of the frequent customer.

In accordance with the above recognition these objectives are achieved by a system according to claim 1 and a process according to claim 7.

Certain preferred embodiments of the invention are defined in the dependent claims.

Further details of the invention will be explained by way of exemplary embodiments with reference to the figures.
Fig. 1 is a schematic block diagram of a frequent customer electronic payment system according to the invention.
Fig. 2 is a flow diagram of a process according to the invention.
Fig. 3a and 3b is a flow diagram of another possible embodiment of the process according to the invention.

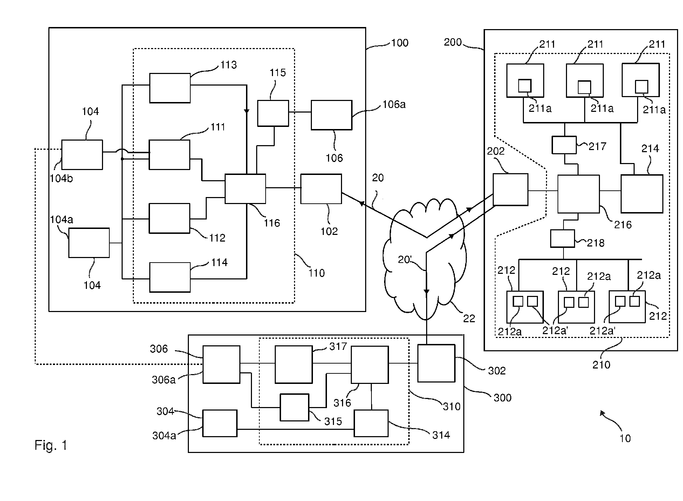

Fig. 1 illustrates a frequent customer electronic payment system 10 comprising at least a product partner communication device 100 and a central IT device 200, which are connectable to each other over an electronic communication channel 20. Such electronic communication channel 20 can be established between two points for example via satellite connection or via an electronic communication network 22, which can be wired or wireless local IT network (LAN) or global IT network, in particular Internet, as well as mobile telecommunication network employing 3G or 4G standards, GSM network, etc.

The product partner communication device 100 is an IT device, comprising a processor, memory and peripheries, such as a computer, laptop, notebook, mobile phone, in particular smart phone, tablet, etc.

The product partner communication device 100 comprises a communication unit 102, at least one input interface 104, at least one output interface 106 and a product partner electronic payment unit 110.

The communication unit 102 is understood to include hardware and software (e.g. network card, network connector, Wifi adapter, antenna, etc.) that enable the product partner communication device 100 to establish the electronic communication channel 20 at least with the central IT device 200 and allow for electronic data traffic thereover.

The product partner communication device 100 preferably comprises as output interface 106 at least a display 106a. Further output interfaces 106 can be applied as well, for example printer, data carrier writer suitable for writing a data carrier (e.g. CD, DVD, floppy disc, pendrive, memory stick, etc.)

The one or more input interface 104 may comprise a keyboard 104a, or instead of that or in addition to that any other conventional input device such as a mouse, digital pen, etc. It is also possible to provide the keyboard 104a in the form of a virtual keyboard, for example the display 106a may have a touch screen on which a virtual keyboard 104a can be displayed as the input interface 104. In this case the output interface 106 is also an input interface 104. Similarly, the data carrier writer may also serve as an input interface 104 as well, if it is a reader-writer device. According to a particularly preferred embodiment the product partner communication device 100 comprises more than one input interfaces 104, of which at least one input interface 104 is a camera or barcode reader 104b and at least one input interface 104 is a conventional user input device, such as the keyboard 104a or mouse, or digital pen, or the display 106 in the form of a touchscreen.

The product partner electronic payment unit 110 comprises a frequent customer data reader part unit 111 and comprises a payment information reader part unit 112 connected to the at least one input interface 104. Connecting two units or part units within a given IT device means that a connection for the electronic transmission of data is provided between the units or part units.

According to the embodiment depicted in Fig. 1 the frequent customer data reader part unit 111 is connected with both input interfaces 104, it is thus connected with the camera/bar code reader 104b as well, while the payment information reader part unit 112 is only connected with the keyboard 104a. According to the present embodiment the product partner electronic payment unit 110 also comprises a payment mode reader part unit 113 and a frequent customer PIN reader part unit 114, which are also connected with an input interface 104, in the present case with the keyboard 104a.

The product partner electronic payment unit 110 further comprises a user surface display part unit 115, which is connected with the at least one output interface 106, in the present case with the display 106a.

The product partner electronic payment unit 110 further comprises an electronic payment control part unit 116, which is in connection with the frequent customer data reader part unit 111, the payment information reader part unit 112, the payment mode reader part unit 113, the frequent customer PIN reader part unit 114, the user surface display part unit 115 and the communication unit 102.

The central IT device 200 comprises a central communication unit 202 and a central electronic payment unit 210.

The central IT device 200 preferably comprises a server or other IT device (e.g. computer, laptop, etc.) fulfilling this purpose.

Again, the central communication unit 202 is understood to include hardware and software (e.g. network card, network connector, Wifi adapter, antenna, etc.) that enable the central IT device 200 to establish the electronic communication channel 20 at least with the product partner communication device 100 and allow for electronic data traffic thereover.

The central electronic payment unit 210 comprises at least a product partner data store part unit 211, wherein the central electronic payment unit 210 keepss an electronic account 211 a of at least one product partner. Preferably, the central electronic payment unit 210 keeps the electronic accounts 211 a of a plurality of product partners within a plurality of product partner data store part units 211.

The central electronic payment unit 210 comprises a plurality of frequent customer data store part unit 212 in which the central electronic payment unit 210 keeps one or more electronic accounts 212a of the frequent customers.

Both the product partner data store part unit 211 and the frequent customer data store part unit 212 may be provided in external data storages, for example the data storages that belong to the central IT device 200 but which are distinct from the server.

The central electronic payment unit 210 further comprises an accounting part unit 214 that is in connection with the product partner data store part unit 211 and the frequent customer data store part unit 212. It further comprises a central control part unit 216, which is in connection with the at least one product partner data store part unit 211, the plurality of frequent customer data store part units 212, the accounting part unit 214, and the central communication unit 202.

The central control part unit 216 is either directly connected to the at least one product partner data store part unit 211 and/or connected indirectly therewith, through a product partner data verification part unit 217. The central control part unit 216 is connected directly and/or indirectly through a frequent customer data verification part unit 218 to the plurality of frequent customer data store part units 212.

The frequent customer electronic payment system 10 preferably comprises a frequent customer mobile communication device 300, which is preferably a mobile IT device having a processor, memory and peripheries, such as a laptop, notebook, mobile phone, in particular smart phone, tablet, etc.

The frequent customer mobile communication device 300 can also be connected to the central IT device 200 through an electronic communication channel 20'. Such electronic communication channel 20' can be established between two points for example via satellite connection or via the same or a different electronic communication network 22 as mentioned before, which can be wired or wireless local IT network (LAN) or global IT network, in particular Internet, as well as mobile telecommunication network employing 3G or 4G standards, GSM network, etc.

The frequent customer mobile communication device 300 comprises a communication unit 302, at least one input interface 304, at least one output interface 306 and a frequent customer electronic payment unit 310.

The communication unit 302 is understood to include hardware and software (e.g. network card, network connector, Wifi adapter, antenna, etc.) that enable the frequent customer mobile communication device 300 to establish the electronic communication channel 20' at least with the central IT device 200 and allow for electronic data traffic thereover.

The frequent customer mobile communication device 300 preferably comprises at least a display 306a as the output interface. Further output interfaces 306 can be applied as well, for example printer, data carrier writer suitable for writing a data carrier (e.g. CD, DVD, floppy disc, pendrive, memory stick, etc.)

The one or more input interface 304 of the frequent customer mobile communication device 300 may comprise a keyboard 304a, or instead of that or in addition to that any other conventional input device such as a mouse, digital pen, etc. It is also possible to provide the keyboard 304a in the form of a virtual keyboard, for example the display 306a may have a touch screen on which a virtual keyboard 304a can be displayed as the input interface 304. In this case the output interface 306 is also an input interface 304.

The frequent customer electronic payment unit 310 comprises a PIN reader part unit 314 which is connected to the at least one input interface 304. It further comprises a user surface display part unit 315, which is connected with the at least one output interface 306.

The frequent customer electronic payment unit 310 comprises a frequent customer electronic payment control part unit 316, which is in connection with the PIN reader part unit 314, the user surface display part unit 312 and the communication unit 302.

Preferably, the frequent customer electronic payment unit 310 comprises a frequent customer data transmitter part unit 317 which is in connection with the output interface 306, preferably with the display 306a of the frequent customer mobile communication device 300 and with the frequent customer electronic payment control part unit 316.

The following process can be implemented with the frequent customer electronic payment system 10.

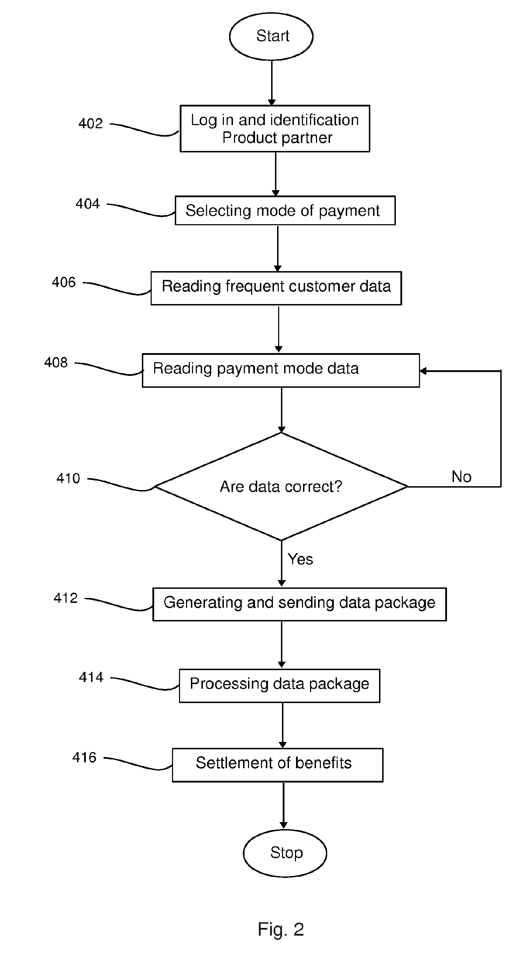

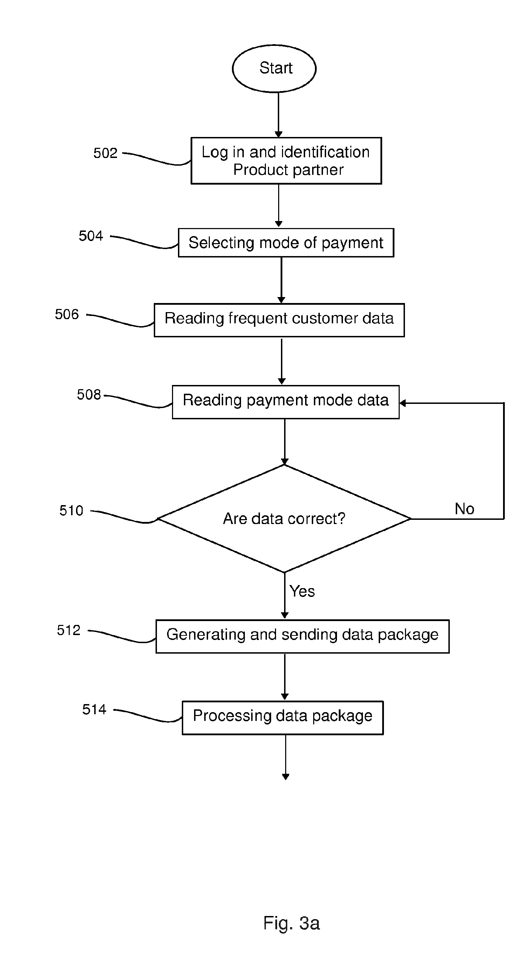

Two embodiments of the invention are demonstrated by the flow diagrams of Figs. 2 and 3a - 3b. According to the first embodiment (Fig. 2) only the settling of the benefits provided by the product partner is carried out electronically by the central IT device 200, while according to the second embodiment (Figs. 3a - 3b) the frequent customer also pays electronically through the central IT device 200.

Electronic accounts 211 a and 212a of each product partner (merchant or service provider) and frequent customer, respectively, are kept in the product partner data store part unit 211 and in the frequent customer data store part unit 212, respectively, of the central electronic payment system 210. The electronic accounts 211 a and 212a are preferably so-called prepaid accounts to which funds can be transferre in advance by the product partners and the frequent customers in order to cover future expenses. This can be carried out in many different ways, for example by bank transfer from a bank account, or by cash payment, or by charging from a bank card, or employing other electronic payment channels (PayPal, Netteler, etc.). The frequent customer need only transfer funds to his one or more electronic accounts 212a which are kept in the frequent customer data store part unit 212 of the central IT device 200 if he or she wishes to take advantage of the electronic payment possibility offered by the invention according to the embodiment depicted in Figs. 3a - 3b.

Both when wishing to pay electronically or conventionally (e.g. by cash or using a bank card), prior to carrying out the process according to the invention the frequent customer who wishes to make a purchase first selects the product(s) or service(s) that he or she wishes to purchase either online (through the webpage of the given product partner) or offline (in the store, bureau, etc. of the given product partner).

According to the first exemplary embodiment illustrated in Fig. 2 after having selected the product or service to be purchased, in Step 402 the product partner establishes via the communication unit 102 of the product partner communication device 100 the electronic communication channel 20 with the central communication unit 202 of the central IT device 200, for example over the Internet as electronic communication network 22. The product partner communication device 100 or its user is authenticated during this step by the central electronic payment unit 210 of the central IT device 200, based on which the product partner providing the benefit is identified. For example the product partner can be identified (and authenticated) based on a user ID and a password.

In case the product partner communication device 100 is a mobile phone (in particular a smart phone) the mobile phone number can serve for identification purposes instead of a user ID. It is further noted that the above described operations need not necessarily be performed at the beginning of the process, other embodiments can be envisaged wherein the electronic communication channel 20 is established only at a later stage of the process, or the identification/authentication of the product partner takes place later on.

In Step 404 the product partner is prompted to select a payment mode by a corresponding invitation with the help of the user surface display part unit 115 and the display 106a, after which payment mode selection data inputted with the input interface 104, preferably keyboard 104a of the product partner communication device 104 is read into the payment mode reader part unit 113. The payment mode selection data is transmitted by the payment mode reader part unit 113 to the electronic payment control part unit 116. The latter processes the payment mode selection data and, depending thereon, asks or does not ask for a frequent customer PIN. According to the first embodiment (Fig. 2) the payment mode selection data does not select the electronic payment mode provided for by the frequent customer electronic payment system 10, but selects instead an other payment mode (e.g. cash, bank card payment, bank transfer from a bank account, etc.). According to the second embodiment (Figs. 3a - 3b) the payment mode selection data selects the electronic payment mode provided for by the frequent customer electronic payment system 10.

In Step 406 frequent customer data is read into the frequent customer data reader part unit 111 with the help of the input interface 104 of the product partner communication device 100. This can be carried out for example such that the operator of the product partner communication device 100 inputs data (e.g. user name or ID), dictated by the frequent customer, via the keyboard 104a of the product partner communication device 100. It is also possible if the frequent customer does not wish to or cannot memorise the necessary data (e.g. ID number) in this case then visual data (bar code, QR code, QR2 code, etc.) that can be recognised and read by the camera/bar code reader 104b of the product partner communication device 100 can be displayed on a pre-given card, or on a photo or graphics provided by the system and pre-printed by the frequent customer, or on the smart phone of the frequent customer. The visual data is read into the frequent customer data reader part unit 111 with the help of the camera/bar code reader 104b of the product partner communication device 100.

According to a particularly advantageous embodiment the frequent customer data are stored (e.g. in the form of a bar code, QR code, QR2 code, etc.) in the frequent customer mobile communication device 300 and it is displayed on the display 306a of the frequent customer mobile communication device 300 with the help of the frequent customer data transmission part unit 317 upon command of the frequent customer electronic payment control part unit 316 in order to be read by the camera/bar code reader 104b of the product partner electronic payment unit 110.

In Step 408 payment information data is read into the payment information reader part unit 112 with the help of the input interface 104, preferably the real or virtual keyboard 104a of the product partner communication device 100. Such payment information data can be the amount of the payment, the date, the bill number, etc. The product partner electronic payment unit 110 may comprise certain default data, for example if the user does not provide a bill number (or invoice number), the product partner electronic payment unit 110 may automatically provide such a number. Similarly, if the user does not provide a purchase data, the product partner electronic payment unit 110 may automatically register the actual date as the date of purchase.

In Step 410 the product partner (user) is preferably prompted to verify the accuracy of the registered (inputted and default) data and the process is continued only if the transaction data are approved.

In Step 412 one or more data packages are generated with the help of the product partner electronic payment control part unit 116 from the inputted and approved frequent customer data and payment information data, which are then forwarded to the communication unit 102 and are sent to the central IT device 200 over the electronic communication channel 20 established between the communication unit 102 and the central communication unit 202 of the central IT device 200 in order to be able to settle the provided benefits between the product partner's electronic account 211 a within the product partner data store part unit 211 and the given and possibly further frequent customers' electronic accounts 212a stored in the frequent customer data store part units 212. Logging in and authentication described in Step 402 may be carried out at this stage instead of carrying it out at the start of the process.

In Step 414 the one or more data packages are received by the central communication unit 202 of the central IT device 200 and are forwarded to the central control part unit 216, with the help of which the data packages are processed. This includes extracting frequent customer data and payment information data from the one or more data packages. A benefit value is determined from the payment information data and if necessary from the product partner's data stored in the product partner data store part unit 211, which product partner has been previously identified based on e.g. the mobile number or other ID. For example the contract of the product partner determines what percentage of commission is to be paid by the product partner with respect to the payment amount contained by the payment information data, which commission information is stored in the product partner data store part unit 211 and is preferably extracted by the product partner data verification part unit 217 for the central control part unit 216.

One or more beneficiary frequent customers are determined from the frequent customer data of the one or more data packages sent by the product partner communication device 100. Preferably at least the frequent customer making the purchase is determined. According to the above mentioned partitioned benefit system, i.e. when the purchase of a given frequent user entitles other frequent users to a benefit as well, the central control part unit 216 also determines those frequent users, based on given rules, that are also entitled to a portion of the benefit for the present purchase. Also, the one or more electronic accounts 212a, stored in the frequent customer data store part units 212 of the frequent customers (including the purchasing frequent customer) entitled to the benefit are determined, preferably with the help of the frequent customer data verification part unit 218. If a frequent customer has more than one electronic accounts 212a, preferably data relating to which electronic account 212a should receive the benefit is also stored in the frequent customer data store part unit 212 for the given frequent customer.

After this, in Step 416 the central control part unit 216 sends a command to the accounting part unit 214 for settling the benefits. The settling is carried out by decreasing the balance of the electronic account 211 a of the product partner providing the benefit by the amount corresponding to the benefit, while an increment is entered on the electronic account(s) 212a of the one or more beneficiary frequent customers corresponding to the portion of the benefit allocated to the given frequent customer.

According to a preferred embodiment each product partner (merchant or service provider) offers a given benefit (e.g. commission) to the frequent customer electronic payment system 10 for the case that a purchase is made through this system. The frequent customer electronic payment system 10 partly redistributes the thus acquired amount partly to the purchasing frequent customer and partly other frequent customers registered earlier who recommended the given frequent customer and this through many levels (to the recommender of the recommender, etc.).

The prepaid electronic account 211 a of the product partner allows the product partner to transfer funds to the electronic account 211 a in one of the above detailed ways. In this way it can be ensured that the amount of the benefit can be transferred to the electronic account(s) 212a of one ore more frequent customers even if the purchasing frequent customer chooses a conventional payment mode (e.g. cash or bank card payment), whereby the payment amount is not entered on the electronic account 211 a of the product partner. Thus, the beneficiary frequent customers receive the benefits for the purchase substantially immediately in this case as well, since the accounting part unit 214 can enter the benefits on the electronic accounts 212a of the beneficiary frequent customers real time.

According to a preferred embodiment, part of the benefits are not usable immediately in order to allow all frequent users that do not know each other to profit from the benefits provided for purchases of all other frequent customers. Accordingly, a portion of the benefit is entered on a virtual electronic account 212a' of the beneficiary frequent customer from which, after having reached a predefined balance a virtual value carrier having an individualised name and value (e.g. point, unit, position, right, etc. with which the measure of purchase intensity can be determined regardless of any currency) is settled (the value of the virtual value carrier is deducted from the virtual account), which can be associated with each other - virtually or in an other way - based on a binary or other principal that can be determined mathematically. When reaching a predetermined number and connection patterns of the value carriers, predetermined amounts are entered on the accounts of the frequent customers disposing with the connected value carriers. Such a frequent customer benefit settling system is currently employed in the Inlernet frequent customer system. According to the concept of the Inlernet frequent customer system a further value carrier connected to each value carrier, and the predetermined patterns and numbers thereof will determine how much amount is generated by a given value carrier for its proprietor, i.e. for the frequent customer. In this way the more money is spent by the frequent customers at the product partners the higher values are entered on the above described virtual account 212a', which allows for acquiring even more of such value carriers. The more value carriers are connected according to the predetermined, e.g. binary principle the higher values are generated for the proprietor of the value carrier. Only a predetermined number of new value carriers can be connected directly to a value carrier (e.g. in a binary system two further value carriers can be connected) within the frequent customer system. Consequently, those who purchase later can only connect their own value carriers to the value carriers of prior purchasers, which leads eventually to everybody profiting from the benefits of purchases of the others.

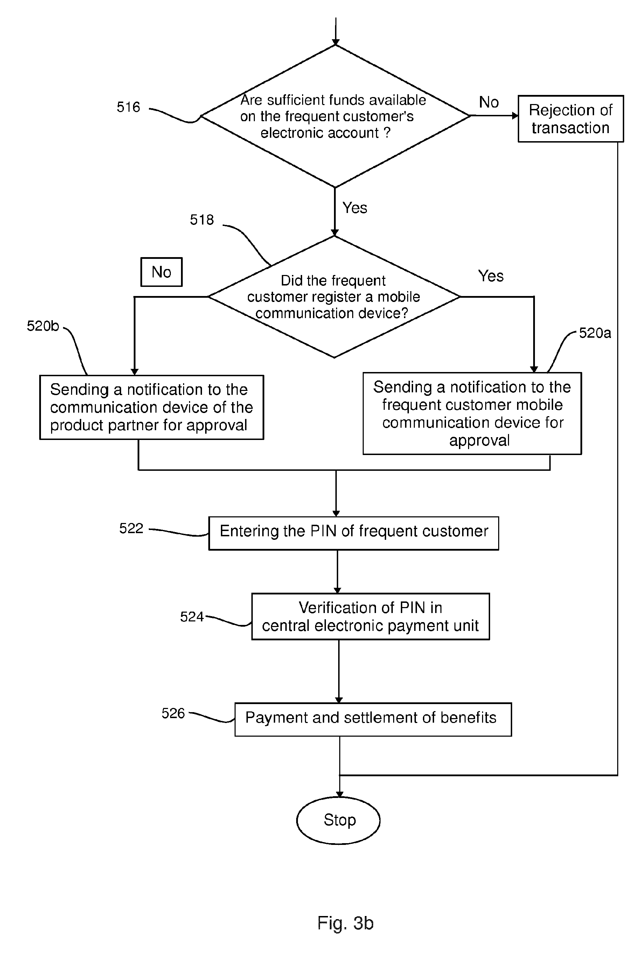

The embodiment depicted in Fig. 3a and 3b differs from the above described process in that following the logging in of the product partner in Step 502, data selecting the electronic payment mode according to the invention is read into the payment mode reader part unit 113 of the product partner electronic payment unit 110 in Step 504, i.e. the purchasing frequent user requests that the purchase be settled by electronic payment. After this, in Step 506 the frequent customer data are read into the frequent customer data reader part unit 111 as explained earlier (manually e.g. with the help of the keyboard 104a or e.g. by reading in a QR code or bar code with the help of the camera/bar code reader 104b).

In Step 508 payment information data is read into the payment information reader part unit 112 as explained above, the accuracy of which may be optionally verified with the help of the product partner communication device 100 in Step 510.

In Step 512 one or more data packages are generated with the help of the product partner electronic payment control part unit 116 from the payment information data and frequent customer data that has been read in and prefereably verified in Step 510, which data packages are then forwarded to the communication unit 102 and are transmitted to the central IT device over the electronic communication channel 20 established between the central communication unit 202 of the central IT device 200 and the communication unit 102.

The one ore more data packages are received by the central communication unit 202 of the central IT device 200 and are forwarded to the central control part unit 216, with the help of which the data packages are processed in Step 514. This includes extracting frequent customer data and payment information data from the one or more data packages. In the case of electronic payment mode the central control part unit 216 first verifies - preferably with the interaction of the frequent customer data verification part unit 218 - whether or not sufficient funds are available on the one or more electronic account 212a associated with the frequent customer data for deducting the amount that can be determined from the payment information. The deduction (debit) amount is preferably the payment amount reduced by the benefits which is determined by the central control part unit 216 based on data related to the product partner, data related to the frequent customer and pre-given rules. If sufficient funds are not available on the frequent customer's electronic account 212a or accounts 212a, then the transaction is declined in Step 516a by the central control part unit 216, which is communicated in a declination message that is sent to the product partner communication device 100 with the help of the central communication unit 202 over the electronic communication channel 20.

If sufficient funds are available for carrying out the transaction then the central control part unit 216 verifies in Step 518 whether or not the frequent customer determined from the frequent customer data registered a frequent customer mobile communication device 300 (e.g. by providing its mobile phone number) for the purpose of receiving notifications. If yes, then in Step 520a the central electronic payment unit 210 establishes the electronic communication channel 20' with the help of the central communication unit 202 with the communication unit 302 of the frequent customer mobile communication device 300, for example over the Internet, as electronic communication network 22. The central control part unit 216 sends a notification concerning the electronic payment over the communication channel 20' to the frequent customer mobile communication device 300, which is then forwarded to the user surface display part unit 315 by the frequent customer electronic payment control unit 316, in order to present it preferably on the display 306a as output interface.

If in Step 518 the central control part unit 216 finds that the user did not register a frequent customer mobile communication device 300 for the purpose of receiving notifications, then the above described message is sent to the product partner communication device 100 over the electronic communication channel 20 in Step 520b.

The notification message preferably includes a data member prompting the frequent customer to enter a PIN, whereby the frequent customer enters his PIN in Step 522. If the message prompting entry of the PIN is sent to the frequent customer mobile communication device 300 by the central IT device 200, then the frequent customer enters the PIN with the input interface 304, e.g. keyboard 304a of the frequent customer mobile communication device 300 to be read in by the PIN reader part unit 314 of the frequent customer electronic payment unit 310. The PIN reader part unit 314 forwards the inputted PIN to the frequent customer electronic payment control unit 316, which generates an electronic response message therefrom and sends it to the central IT device 200.

If the message prompting entry of the PIN is sent to the product partner communication device 100 by the central IT device 200, then the frequent user enters the PIN on the input interface 104, e.g. keyboard 104a of the product partner communication device 100 for reading in by the PIN reader part unit 114 of the product partner electronic payment unit 110. The PIN reader part unit 114 forwards the entered PIN to the product partner electronic payment control unit 116, which generates an electronic response message therefrom and sends it to the central IT device 200.

In Step 524 the central control part unit 216 verifies the PIN that has been sent back, preferably with the frequent customer data verification part unit 218, which compares the returned PIN with the PIN stored in the frequent customer data store part unit 212. In case of a correct PIN, in Step 526, the central control part unit 216 commands the accounting unit 214 to decrease the balance of the electronic account 212a of the purchasing frequent customer by the debit amount and to increase the balance of the electronic account 211 a of the product partner that is providing the benefit with a corresponding credit amount. The latter may be influenced by the amount of the benefits due to the other frequent customers and the charge due to the operator of the frequent customer electronic payment system 10. The amount reduced by the benefits that has been deducted from the prepaid electronic account 212a of the frequent customer can be substantially immediately entered on the electronic account 211 a of the merchant/service provider that is kept in the product partner data store part unit 211, or if this is requested, may be transferred to a bank account of the merchant/service provider that is kept by a financial institute.

In Step 526 the accounting unit 214 also books the benefits of the other frequent customers that are entitled to a benefit based on the purchase of the purchasing frequent customer as explained above.

The advantage of the frequent customer electronic payment system 10 according to the invention and of the process according to the invention is that benefits provided for the purchase of a given frequent customer can be settled, i.e. entered on the beneficiary frequent customer's electronic account 212a, which is kept centrally, quasi real time; furthermore, benefits can be simultaneously entered on the electronic accounts 212a of other frequent customers as well. The invention also allows the purchasing frequent customer to carry out an electronic pamyent in the course of which the debit amount is deducted from one of his centrally kept electronic accounts 212a and a corresponding credit amount is entered on the electronic account 211 a of the product partner which is also kept centrally. Thereby, the product partner can receive money and provide a benefit to the frequent customer without additional costs (bank costs, etc.).

Various modifications to the above disclosed embodiments will be apparent to a person skilled in the art without departing from the scope of protection determined by the attached claims.

## Claims

1. Frequent customer electronic payment system for settling benefits provided to frequent customers by product partners, **characterised by** comprising a product partner communication device (100) and a central IT device (200) which are connectable by an electronic communication channel (20),
which product partner communication device (100) comprises:
- a communication unit (102)
- at least one input interface (104),
- at least one output interface (106), and
- a product partner electronic payment unit (110) having:
- a frequent customer data reader part unit (111) and a payment information reader part unit (112) in connection with the at least one input interface (104), and
- a user surface display part unit (115) in connection with the at least one output interface (106), and
- an electronic payment control part unit (116) in connection with the frequent customer data reader part unit (111), the payment information reader part unit (112), the user surface display part unit (115) and the communication unit (102)
and which central IT device (200) comprises:
- a central communication unit (202), and
- a central electronic payment unit (210) having:
- at least one product partner data store part unit (211),
- a plurality of frequent customer data store part units (212),
- an accounting part unit (214) in connection with the product partner and the frequent customer data store part units (211, 212), and
- a central control part unit (216) in connection with the at least one product partner data store part unit (211), the plurality of frequent customer data store part units (212), the accounting part unit (214), and the central communication unit (202).

2. The frequent customer electronic payment system according to claim 1, **characterised by** that the product partner electronic payment part unit (110) comprises a payment mode reader part unit (113) in connection with the at least one input interface (104) and the electronic payment control part unit (116).

3. The frequent customer electronic payment system according to claims 1 or 2, **characterised by** that the product partner electronic payment part unit (110) comprises a PIN reader part unit (114) in connection with the at least one input interface (104) and the electronic payment control part unit (116).

4. The frequent customer electronic payment system according to any one of claims 1 to 3, **characterised by** that the central control part unit (216) is in connection with the the at least one product partner data store part unit (211) through a product partner data verification part unit (217), and is in connection with the plurality of frequent customer data store part units (212) through a frequent customer data verification part unit (218).

5. The frequent customer electronic payment system according to any one of claims 1 to 4, **characterised by** that it comprises a frequent customer communication device (300) having:
- a communication unit (302),
- at least one input interface (304),
- at least one output interface (306), and
- a frequent customer electronic payment unit (310), which comprises:
- a PIN reader part unit (314) in connection with the at least one input interface (304), and
- a user surface display part unit (315) in connection with the at least one output interface (306), and
- a frequent customer electronic payment control part unit (316) in connection with the PIN reader part unit (314), the user surface display part unit (315) and the communication unit (302).

6. The frequent customer electronic payment system according to a claim 5, **characterised by** that the frequent customer electronic payment unit (310) comprises a frequent customer data transmitter part unit (317) which is in connection with the at least one output interface (306) of the frequent customer mobile communication device (300) and with the frequent customer electronic payment control part unit (316).

7. Process for settling benefits provided by a product partner to a frequent customer in a frequent customer electronic payment system, **characterised by**
- providing a central IT device (200) and a product partner communication device (100) which are connectable with each other over an electronic communication channel (20),
- reading in frequent customer data by an input interface (104) of the product partner communication device (100),
- reading in payment information data by the input interface (104) of the product partner communication device (100),
- generating one or more data packages from the read in frequent customer data and the payment information data,
- establishing an electronic communication channel (20) between the product partner communication device (100) and the central IT device (200),
- identifying the product partner communication device (100) or its user by the central IT device (200) and based on the identification determining a product partner providing a benefit,
- transmitting the one or more data packages by the product partner communication device (100) to the central IT device (200) over the electronic communication channel (20),
- extracting the frequent customer data and the payment information data from the one or more data packages,
- determining one or more beneficiary frequent customers from the frequent customer data,
- determining a benefit amount from the payment information data,
- decreasing the balance of the product partner providing the benefit in accordance with the amount of the benefit,
- increasing the balance of the one or more beneficiary frequent customers' account in accordance with the amount of the benefit.

8. The process according to claim 7, **characterised by** reading in payment mode selection data by the input interface (104) of the product partner communication device (100) and
- requesting a frequent customer PIN in case the read in payment mode selection data determines electronic payment,
- sending the PIN to the central IT device (200) over an electronic communication channel (20, 20'),
- verifying the PIN by the central IT device (200) based on the frequent customer data,
- determining a debit amount from the payment information,
- in case of correct PIN decreasing the balance of the account of the frequent customer determined from the frequent customer data in accordance with the debit amount,
- increasing the balance of the account of the product partner providing the benefit in accordance with the debit amount.

9. The process according to claim 8, **characterised by** reading in the PIN by the input interface (104) of the product partner communication device (100), and transmitting it to the central IT device (200) over the communication channel (20) established with the central IT device (200).

10. The process according to claim 8, **characterised by** reading in the PIN by an input interface (304) of a frequent customer communication device (300), and establishing an electronic communication channel (20') between the frequent customer mobile communication device (300) and the central IT device (200), and transmitting the PIN to the central IT device (200) over this communication channel (20').
